# EUROPEAN PATENT APPLICATION

(11) **EP 4 737 857 A1**
(43) Date of publication of application: **06.05.2026**
(21) Application number: 24209853.1
(22) Date of filing: 30.10.2024
(51) Int. Cl.: G01C 21/20, B63B 49/00, G08G 3/00

(54) **FEASIBLE SHIP VOYAGE PLANNING**

(71) Applicant: ABB SCHWEIZ AG, 5400 Baden (CH)
(72) Inventor: SHARIFI, Maryam, 163 64 Spånga (SE); FEYZMAHDAVIAN, Hamid, 169 73 Stockholm (SE)
(74) Representative: Kransell & Wennborg KB

(57) **Abstract**

The present invention generally relates to a computer-implemented method for path planning for marine vessels, comprising: acquiring (S102) start position data and destination position data for the marine vessel, acquiring (S104) static obstacle position data; acquiring (S106) environmental data (28, 31, 33) indicating at least one of wind speed and direction, sea current strength and direction, and wave conditions, determining (S108) multiple paths (54, 55, 56) from the start position to the destination position based on map data, the static obstacle position data, and the environmental data, where the multiple paths avoid static obstacles and respect propulsion capabilities of the marine vessel, wherein each of the multiple paths optimize a respective key indicator among a plurality of key indicators, ranking (S110) the determined paths according to one of the key indicators, and providing (S112) an output signal (62) indicating at least a subset of the ranked generated paths.

## Description

### Field of the Invention

The present invention generally relates to a computer-implemented method for path planning for marine vessels, to a control unit for executing the method, to a marine vessel comprising the control unit, and to a corresponding computer program product.

### Background

Path planning algorithms play a key role in optimizing performance and ensuring the successful execution of missions for marine vessels. These algorithms are responsible for generating position trajectories and speed profiles, while accounting for various constraints such as propulsion capabilities and obstacles at sea.

Traditional maritime path planning solutions face challenges in generating feasible routes that align with a vessel's capabilities and lack the diversity of alternatives in path selection which may lead to suboptimal path selection. That is, it would be desirable to increase the diversity in maritime path planning.

### Summary

In view of the above-mentioned and other drawbacks of the prior art, it is an object of the present invention to provide a method for path planning for marine vessels that at least partly alleviates the drawbacks of prior art.

According to a first aspect of the invention, there is provided a computer-implemented method for path planning for marine vessels, comprising: acquiring start position data and destination position data for the marine vessel, acquiring static obstacle position data; acquiring environmental data indicating at least one of wind speed and direction, sea current strength and direction, and wave conditions, determine multiple paths from the start position to the destination position based on map data, the static obstacle position data, and the environmental data, where the multiple paths avoid static obstacles and respect propulsion capabilities of the marine vessel, wherein each of the multiple paths optimize a respective key indicator among a plurality of key indicators, ranking the determined paths according to one of the key indicators, and provide an output signal indicating at least a subset of the ranked generated paths.

The present invention is at least partly based on the realization of determining multiple paths which are optimized according to different key indicators. A key indicator value for all the multiple paths and all key indicators can be determined such that, for a given or selected key indicator, a ranking of the paths can be determined where the most optimal path for the given key indicator is given highest rank and the least optimal path for the given key indicator is given lowest rank. With ranking according to a key indicator, the possibility to choose the key indicator provides the ability to find a path that is optimized according to a preferred one of the key indicators. Thus, the path planning is not locked to a given optimization parameter, but a diversity of alternatives is provided.

The present invention identifies alternative routes that differ from a primary path and ensures safe maneuvering when the primary path becomes inaccessible due to obstacles such as other ships, collisions, or unforeseen events. For example, if an island lies between the starting point and the destination, the method may generate at least one path on each side of the island, both the right and left, providing multiple viable options for navigation.

Start position data and destination position data may be for example GNSS (global navigation satellite system) or GPS (global positioning system) position data indicating the start position and destination position.

The environmental data may be acquired by on-board sensors or by onshore or offshore weather stations that send the data to the marine vessel.

The positions of obstacles may be determined by on-board sensors such as Radar and Lidar and/or by receiving navigation data such as GPS signals, or position data received from secondary marine vessels.

For ranking of the generated paths based on a key indicator, key indicator values may be considered. The values are organized from most preferred to least preferred, and the ranking of the generated paths for the selected key indicator is made accordingly.

In embodiments, the method may comprise receiving a selection signal indicating a selection of another one of the key indicators and adapting the ranking to the selected key indicator. Advantageously, this allows for ranking the generated paths according to another one of the key indicators. That is, an operator may select a preferred key indicator for the present situation, providing flexibility and customization in path planning.

In embodiments, the key indicators may include travel time, energy consumption without considering wind, sea current, and wave conditions, and energy consumption taking into account wind, sea current, and wave conditions. Thereby, three important key indicators are selectable. For example, by including indicators like wind-assisted energy contribution, the method optimizes not only for speed and fuel usage but also for sustainability by leveraging natural energy sources such as wind.

In embodiments, the method may comprise determining, using the environmental data, an amount of auxiliary propulsion that can be generated for the marine vessel from renewable energy sources, wherein the amount of auxiliary propulsion is taken into account when determining the multiple paths and their energy consumption. That is, the energy efficiency and sustainability may be enhanced and reduce reliance on traditional fuels and lowers operational costs.

In embodiments, the auxiliary propulsion may be one of a photovoltaic system and a Magnus rotor.

In embodiments, the environmental data may include real-time weather information retrieved via an Application Programming Interface (API) from an external weather service. This provides for dynamic adaptation to changing environmental conditions. This allows the path planning system to be highly responsive and allows continuously adjusting the determined paths based on present weather conditions, such as wind, waves, and sea currents, enhancing both safety and efficiency.

In embodiments, static obstacle position data may be periodically updated based on changes in the environment, including the detection of floating objects or other vessels, using onboard radar or sonar systems. This allows for adjusting the determined paths in case of unpredicted appearance of objects, thereby reducing the risk of collision.

In embodiments, the propulsion capabilities of the marine vessel may include at least one of, minimum turning radius, allowable speed, roll constraints, acceleration and deceleration capacities, and propulsion capabilities with respect to the depth of water. That is, the method determines feasible paths that are compatible with the vessel's physical and operational capabilities. This ensures that the determined routes are not only optimized according to the key indicators but are also navigationally practical based on the vessel's operational maneuvering and propulsion capabilities.

In embodiments, the multiple paths may be determined using a graph-based algorithm to calculate the shortest or most efficient route between waypoints based on the respective key indicator. Additionally, a sparsity pattern identifier algorithm may be employed to compute alternative routes with acceptable variations from the optimal path. The graph-based algorithm may be the Dijkstra's Algorithm. In this way, efficient pathfinding can be ensured and determined with high computational efficiency.

In embodiments, the method may comprise calculating collision free waypoints between the start position and the destination position based on the obstacle position data using a Voronoi-diagram method. This method enhances the safety of navigation, particularly in cluttered environments with many obstacles, by generating routes that maintain safe distances from obstacles.

The method may be autonomously performed for an at least partly autonomous marine vessel.

According to a second aspect of the invention, there is provided a control unit configured to perform the steps of any one of the embodiments of the first aspect.

Further effects and features of the second aspect of the invention are largely analogous to those described above in connection with the first aspect of the invention.

According to a third aspect of the invention, there is provided a system for path planning for marine vessels, comprising: a control unit according to the second aspect, a human-machine interface configured to provide an output of the determined multiple paths; and an input device configured to receive a selection of a key indicator to be used for the ranking.

The human-machine interface may be a display. The input device may be a joystick, a keyboard, a mouse, or a similar device which can be used for providing input to a computer.

There is further provided a marine vessel comprising the control unit and/or the system.

Further effects and features of the third aspect of the invention are largely analogous to those described above in connection with the first aspect of the invention.

According to a fourth aspect of the invention, there is provided a computer program product for performing the method described herein, when executed by a control unit.

The computer program product comprises program code for acquiring start position data and destination position data for the marine vessel, acquiring static obstacle position data; acquiring environmental data indicating at least one of wind speed and direction, sea current strength and direction, and wave conditions, determine multiple paths from the start position to the destination position based on map data, the static obstacle position data, and the environmental data, where the multiple paths avoid static obstacles and respect propulsion capabilities of the marine vessel, wherein each of the multiple paths optimize a respective key indicator among a plurality of key indicators, ranking the determined paths according to one of the key indicator, and providing an output signal indicating at least a subset of the ranked generated paths.

Further effects and features of the fourth aspect of the invention are largely analogous to those described above in connection with the first aspect of the invention.

Further features of, and advantages with, the present invention will become apparent when studying the appended claims and the following description. The skilled person realizes that different features of the present invention may be combined to create embodiments other than those described in the following, without departing from the scope of the present invention.

### Brief Description of the Drawings

These and other aspects of the present invention will now be described in more detail, with reference to the appended drawings showing an example embodiment of the invention, wherein:
Fig. 1 schematically illustrates a marine vessel according to an embodiment of the invention;
Fig. 2A-B is a flow-chart of method steps according to embodiments of the present invention;
Fig. 3 schematically illustrates a marine vessel, obstacles, and determined paths according to embodiments of the present invention;
Fig. 4 is a flow-chart of method steps according to embodiments of the present invention; and
Fig. 5 schematically illustrates ranking of paths for three different key indicators according to embodiments of the present invention.

### Detailed Description of Example Embodiments

In the present detailed description, various embodiments of the present invention are herein described with reference to specific implementations. In describing embodiments, specific terminology is employed for the sake of clarity. However, the invention is not intended to be limited to the specific terminology so selected. While specific exemplary embodiments are discussed, it should be understood that this is done for illustration purposes only. A person skilled in the relevant art will recognize that other components and configurations can be used without parting from the scope of the invention.

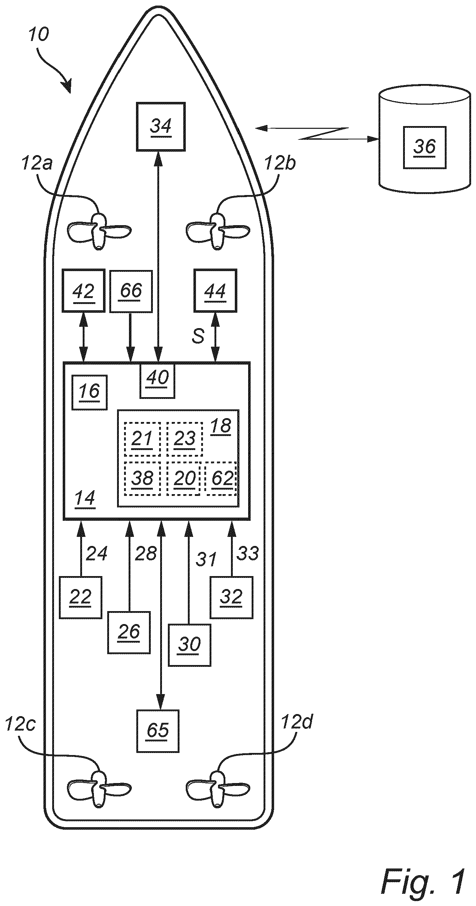

Fig. 1 schematically represents a top view of a marine vessel 10. The marine vessel 10 may for example be a ship or a floating production storage and offloading (FPSO) unit. The vessel 10 comprises a plurality of thrusters, here a first thruster 12a, a second thruster 12b, a third thruster 12c and a fourth thruster 12d. One, several or all of the thrusters 12a-12d may also be referred to with reference numeral "12".

Each thruster 12 is rotatable in a horizontal plane (parallel with the drawing plane of Fig. 1) into different thrust directions. Each thruster 12 may comprise a propeller and an engine driving the propeller. By increasing an engine speed of the engine, the thrust force of the thruster 12 can be increased, and vice versa. The thrusters 12 are here exemplified as azimuthing thrusters although other types of thrusters or propulsion systems are also envisaged. The marine vessel 10 may further comprise auxiliary propulsion 65 such as one of a photovoltaic system or a Magnus rotor, controllable by the control system 14.

The vessel 10 further comprises a control system 14. The control system 14 of this example comprises a control unit 16 and a memory 18. The memory 18 has a computer program 20 stored thereon. The computer program 20 comprises program code which, when executed by the control unit 16, causes a data processing device, or control unit 16 to perform, or command performance of, various steps described herein.

As shown in Fig. 1, a model 21 of the vessel 10 may be stored in the memory 18. The model 21 may for example be a nonlinear model of the vessel 10 describing the motion of the vessel 10 in the horizontal plane.

The vessel 10 of this example further comprises one or more sensors, here exemplified as a position sensor 22. The position sensor 22 is arranged to provide position data 24 to the control system 14. The position data 24 is indicative of a position of the vessel 10 in the horizontal plane. The position sensor 22 may for example be a GPS device further providing map data to the control system 14. The marine vessel 10 may further have access to nautical charts 38 and map data 23 from the memory 18 or from the server 36.

The vessel 10 may further comprise sensors 26, 30, 32 for detecting wind strength and direction, sea current strength and direction, and wave conditions. Wind data 28 may be provided from the wind sensor 26 to the control system 14, sea current data 31 may be provided from the sea current sensor 30 to the control system 14, and wave condition data 33 such as wave height, speed, and frequency may be provided from the wave condition sensor 32 to the control system 14. Alternative or additionally, the control system 14 may receive wind data and/or sea current data remotely using wireless communication technology 34 from an onshore or offshore weather station 36 or server 36, and preferably through an Application Programming Interface (API) 40.

The vessel 10 further comprises a human-machine interface 42 configured to provide an output of determined multiple paths as will be discussed more in detail herein. The human-machine interface may be a display 42 communicatively connected to the control unit 14. Furthermore, the marine vessel 10 may comprise an input device 44 configured to receive a selection of a key indicator to be used for a ranking of paths. The input device may be a joystick, a keyboard, a mouse, or a similar device which can be used for providing input to a computer.

When operating a marine vessel 10 along a path the control system 14 controls the thrusters 12 to propel the marine vessel 10 from a start position to a destination position. It is desirable to find a safe path that avoids collisions with obstacles, however, it is often desirable to also optimize the path in accordance with further criteria, herein referred to as key indicators. The present invention addresses the case when it may be desirable to be able to select a key indicator for which the path is optimized. The user may even be provided to toggle between different paths depending on a selection of key indicator, or display different paths optimized for different key indicators.

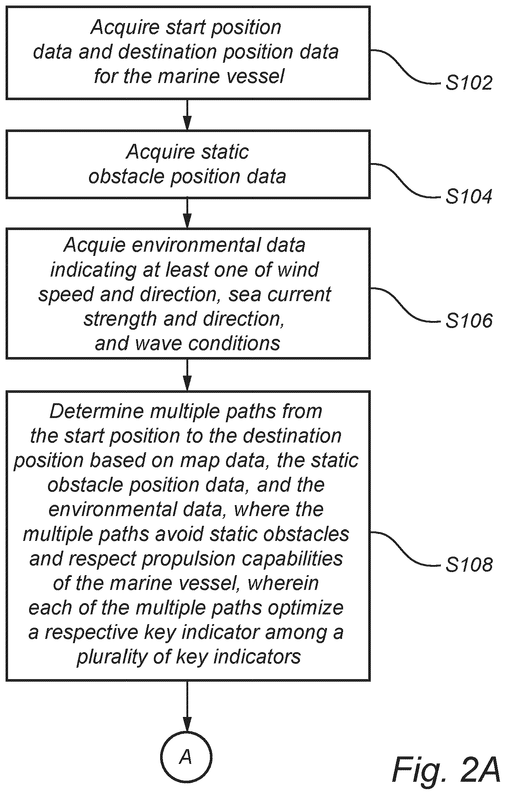

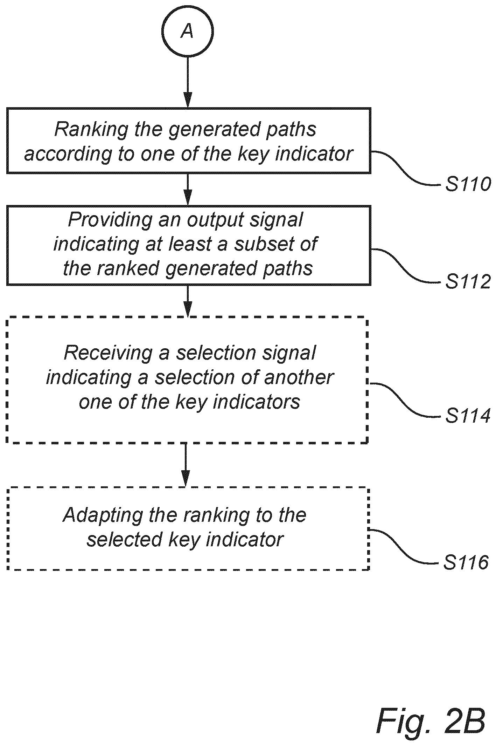

Fig. 2A-B is a flow-chart of method steps for path planning for marine vessels according to embodiments of the invention. Note that connector A connects steps of fig. 2A with steps of fig. 2B.

The method comprises a step S102 of acquiring, by the control unit 16, start position data and destination position data for the marine vessel 10. The start position data and destination position data indicate the present location of the vessel 10 and an intended next position of the marine vessel 10 which need not be the final destination of the vessel.

In step S104, acquiring, by the control unit 16, static obstacle position data. The static obstacle position data indicates locations, either as GPS coordinates on a nautical chart 38 or map 23, or locations relative to the vessel 10, or static obstacles. A static obstacle is an obstacle that does not substantially change position in the horizontal plane. However, obstacles such as oil rigs, buoys, or similar movable objects may be included in the static obstacle position data.

In some embodiments, the static obstacle position data is periodically updated based on changes in the environment. Such changes may be detection of floating objects or other vessels, and the detection may be performed using onboard radar or sonar systems 66 connected to the control unit 16 of the control system 14 for providing input data thereof. For this, environmental changes around the ship, such as anchored vessels or blocked waterways, are represented as static obstacles, and the data of the statis obstacles is translated into polygons, based on the detected shapes, on the map. The algorithm for determining the paths then treats these areas as forbidden zones for path planning.

In step S106, acquiring, by the control unit 16, environmental data 28, 31, 33 indicating at least one of wind speed and direction, sea current strength and direction, and wave conditions. The environmental data may be acquired from sensors 26, 30, 32 of the marine vessel 10. However, in some embodiments, the environmental data includes real-time weather information retrieved via an Application Programming Interface (API) 40 from an external weather service 36.

In step S108, determining, by the control unit 14, multiple paths from the start position to the destination position based on map data, the static obstacle position data, and the environmental data. The multiple paths avoid static obstacles and respect propulsion capabilities of the marine vessel, and each of the multiple paths optimize a respective key indicator among a plurality of key indicators.

The propulsion capabilities of the marine vessel include at least one of, minimum turning radius, allowable speed, roll constraints, acceleration and deceleration capacities, and propulsion capabilities with respect to the depth of water and may be included in the model 21 of the vessel, or it may be stored in a look-up table.

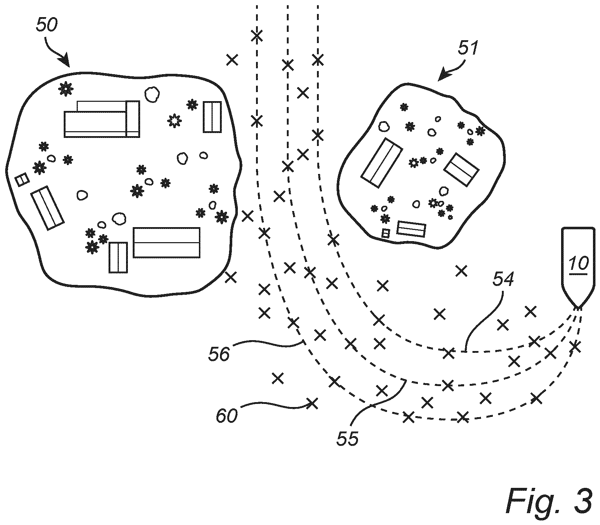

Fig. 3 schematically illustrates a marine vessel 10, static obstacles 50, 51 exemplified as islands, and three example determined paths 54, 55, 56. The determined paths 54, 55, 56 are optimized with respect to three different key indicators, for example, the path 54 may be optimized with respect to travel time, the path 55 may be optimized with respect to energy consumption not considering wind, sea current and wave contribution to the energy consumption, and path 56 may be optimized with respect to energy consumption taking into account at least one of wind, sea current, and wave contribution. The path 56 may for example use better the direction of wind, and/or sea current, and/or waves to enable reduction in fuel consumption.

Alternatively, the control unit 14 may determine, using the environmental data, an amount of auxiliary propulsion that can be generated for the marine vessel 10 from renewable energy sources. This amount can be taken into account when determining the multiple paths 54, 55, 56 and their energy consumption. Such auxiliary propulsion 65 may for example include one of a photovoltaic system or a Magnus rotor. In this way, it may be more beneficial, from an energy consumption point of view, to take the somewhat longer path 56 and use the renewable energy sources compared to taking the shorter paths 54 or 55.

Determining the paths 54-56 may be performed in various ways such as using machine learning algorithms including transfer learning, graph neural network, reinforcement learning, deep neural networks, and optimization problem solvers, known per se in the art. Below is an explicit example of determining the paths.

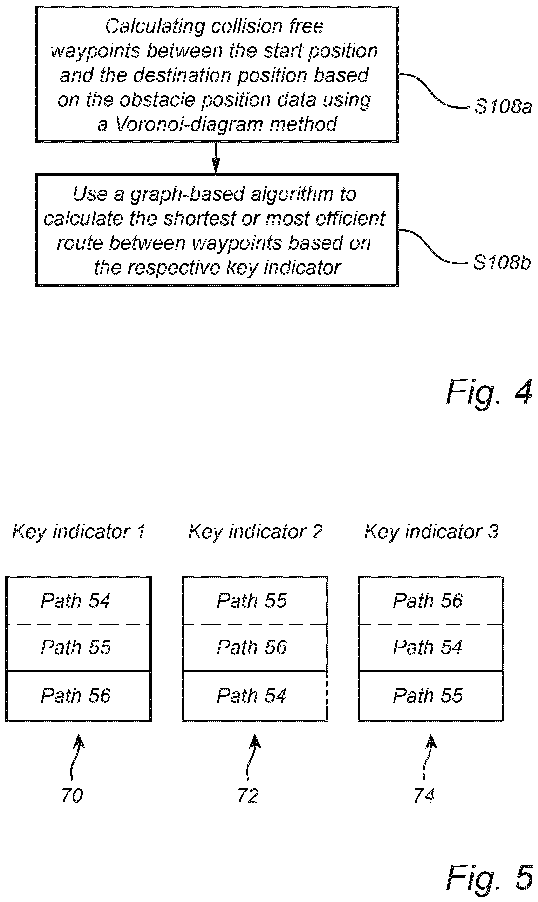

Fig. 4 is a flow-chart of method steps to determine the paths in step S108, according to one possible embodiment. The method includes step S108a of calculating collision free waypoints 60 between the start position and the destination position based on the static obstacle position data using a Voronoi-diagram method. That is using the Voronoi-diagram method, a set of collision free waypoints, shown in fig. 3 are calculated that are considered available for travel for the marine vessel 10. This provides a set of positions 60 that a further algorithm can use when determining the paths 54-56.

The Voronoi-diagram method is known *per se* and is used for finding collision free paths by building and extending collision-free polygons around the obstacles which form forbidden areas to enter.

In step S108b, determining the multiple paths using a graph-based algorithm (such as the Dijkstra's Algorithm) to calculate the shortest or most efficient route between waypoints 60 based on the respective key indicator.

Returning to the flow-chart in fig. 2A-B.

In step S110, ranking the determined paths according to one of the key indicators. In other words, the paths 54-56 may be ranked depending on how well they optimize each of the key indicators.

Turning to fig. 5, there are shown three example, and simplified tables 70, 72, 74, one for each of three key indicators. For key indicator 1, it is path 54 that is best optimized followed by path 55 and path 56. For key indicator 2, it is path 55 that is best optimized followed by path 56 and path 54. For key indicator 3, it is path 56 that is best optimized followed by path 54 and path 55.

The control unit 16 provides, in step S112, an output 62 of the ranked generated paths 54-56. The output 62 may be provided to the display 42 where paths may be shown on a digital map according to a selected or present key indicator. For example, if key indicator 1 is selected, the paths 54-56 may be shown with its relative ranking, either in a table 70, or in some other way indicated or coded in the digital map. For example, by typing out the key indicator values for each path 54-56 for the present key indicator, or by color coding or using different line types for the paths depending on their ranking.

If a user wants to toggle through the key indicators, the control unit 16 may receive, in optional step S114, a selection signal S indicating a selection of another one of the key indicators. For example, an operator may instead want to know which is the optimal path if key indicator 2 is instead selected, see table 72, or if key indicator 3 is selected, see table 74 in fig. 5.

The control unit 14 then adapts, in optional step S116, the ranking to the selected key indicator. If the ranking is adapted, then so is the output on the display 42. As an example, an operator may toggle from key indicator 1 associated with the ranking in table 70, to the key indicator 2 associated with the ranking in table 72. This adapts the ranking shown on the display to that path 55 is the highest ranked path followed by path 56 and path 54. Similarly, the operator may toggle from key indicator 1 or key indicator 2 to key indicator 3 which adapts the ranking shown on the display 42 to that path 56 is the highest ranked path followed by path 54 and path 55.

In this way, an operator may quickly toggle between different key indicators which provides diverse alternatives when planning a path for the marine vessel 10.

A control unit may include a microprocessor, microcontroller, programmable digital signal processor or another programmable device. The control unit may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device.

In one or more examples, the functions described may be implemented in hardware, software, firmware, or any combination thereof. If implemented in software, the functions may be stored on or transmitted over as one or more instructions or code on a computer-readable medium and executed by a hardware-based processing unit. Computer-readable media may include computer-readable storage media, which correspond to tangible media such as data storage media, or communication media including any media that facilitate the transfer of a computer program from one place to another, e.g., according to a communication protocol. In this manner, computer-readable media generally may correspond to (1) tangible computer-readable storage media which are non-transitory or (2) a communication media such as signal or carrier waves. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer.

Even though the invention has been described with reference to specific exemplifying embodiments thereof, many different alterations, modifications and the like will become apparent for those skilled in the art.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A computer-implemented method for path planning for marine vessels, comprising:
acquiring (S102) start position data and destination position data for the marine vessel,
acquiring (S104) static obstacle position data;
acquiring (S106) environmental data (28, 31, 33) indicating at least one of wind speed and direction, sea current strength and direction, and wave conditions,
determining (S108) multiple paths (54, 55, 56) from the start position to the destination position based on map data, the static obstacle position data, and the environmental data, where the multiple paths avoid static obstacles and respect propulsion capabilities of the marine vessel, wherein each of the multiple paths optimize a respective key indicator among a plurality of key indicators,
ranking (S110) the determined paths according to one of the key indicators, and
providing (S112) an output signal (62) indicating at least a subset of the ranked generated paths.

2. The method of claim 1, further comprising:
receiving (S114) a selection signal (S) indicating a selection of another one of the key indicators, and
adapting (S116) the ranking to the selected key indicator.

3. The method of any of claims 1-2, wherein key indicators include travel time, energy consumption, and energy consumption taking into account wind/current/wave contribution.

4. The method of any of claims 1-3, comprising:
determining, using the environmental data, an amount of auxiliary propulsion that can be generated for the marine vessel from renewable energy sources, wherein the amount of auxiliary propulsion is taken into account when determining the multiple paths and their energy consumption.

5. The method of claim 4, wherein the auxiliary propulsion (65) is one of a photovoltaic system and a Magnus rotor.

6. The method of any of claims 1-5, wherein the environmental data includes real-time weather information retrieved via an Application Programming Interface (API) (40) from an external weather service.

7. The method of any of claims 1-6, wherein static obstacle position data is periodically updated based on changes in the environment, such as the detection of floating objects or other vessels, using onboard radar or sonar systems.

8. The method of any of claims 1-7, wherein the propulsion capabilities of the marine vessel include at least one of, minimum turning radius, allowable speed, roll constraints, acceleration and deceleration capacities, and propulsion capabilities with respect to the depth of water.

9. The method of any of claims 1-8, comprising:
calculating collision free waypoints between the start position and the destination position based on the obstacle position data using a Voronoi-diagram method.

10. The method of any of claims 1-9, wherein the multiple paths are determined using a graph-based algorithm to calculate the shortest or most efficient route between waypoints based on the respective key indicator.

11. A control unit (16) configured to execute the method of any one of the preceding claims.

12. A system for path planning for marine vessels, comprising:
a control unit according to claim 11,
a human-machine interface (42) configured to provide an output of the determined multiple paths; and
an input device (44) configured to receive a selection of a key indicator to be used for the ranking.

13. The system according to claim 12, wherein the human-machine interface is a display.

14. A marine vessel (10) comprising a control unit (16) according to claim 11 and/or a system according to any one of claims 12-13.

15. A computer program product (20) comprising program code for performing the method according to any one of claims 1-10, when executed by a control unit.
